(19) **Europäisches Patentamt / European Patent Office / Office européen des brevets**

(11) **EP 4 495 200 A1**

(12) **EUROPEAN PATENT APPLICATION**
published in accordance with Art. 153(4) EPC

(43) Date of publication:
**22.01.2025 Bulletin 2025/04**

(21) Application number: **23770755.9**

(22) Date of filing: **13.03.2023**

(51) International Patent Classification (IPC):
**C09J 7/30** (2018.01)   **C09J 5/00** (2006.01)
**C09J 7/20** (2018.01)

(52) Cooperative Patent Classification (CPC):
**C09J 5/00; C09J 7/20; C09J 7/30**

(86) International application number:
**PCT/JP2023/009716**

(87) International publication number:
**WO 2023/176800 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.03.2022 JP 2022039503**

(71) Applicants:
• **NITTO DENKO CORPORATION**
  **Ibaraki-shi**
  **Osaka 567-8680 (JP)**

• **Nitto Shinko Corporation**
  **Sakai-shi, Fukui 910-0381 (JP)**

(72) Inventors:
• **SUZUKI Yuto**
  **Ibaraki-shi, Osaka 567-8680 (JP)**
• **UEDA Satoshi**
  **Ibaraki-shi, Osaka 567-8680 (JP)**
• **KATO Osamu**
  **Sakai-shi, Fukui 910-0381 (JP)**

(74) Representative: **Müller-Boré & Partner**
**Patentanwälte PartG mbB**
**Friedenheimer Brücke 21**
**80639 München (DE)**

(54) **EASILY DISMANTLED ADHESIVE SHEET, LAMINATE, JOINED BODY, METHOD FOR PRODUCING JOINED BODY, AND METHOD FOR DISMANTLING JOINED BODY**

(57)   The present invention relates to an easily dismantling adhesive sheet having a layer having pressure-sensitive adhesiveness and adhesiveness containing an inorganic expanding agent and a resin, in which the layer having pressure-sensitive adhesiveness and adhesiveness has a pressure-sensitive adhesive strength of 1.0 N/20 mm or more, and relates to a laminated body using the easily dismantling adhesive sheet, a joined body, a method for producing a joined body, and a method for dismantling a joined body.

FIG. 1

**Description**

TECHNICAL FIELD

The present invention relates to an easily dismantling adhesive sheet, a laminated body, a joined body, a method for producing a joined body, and a method for dismantling a joined body.

BACKGROUND ART

An adhesive is used to join members made of various materials such as a resin, rubber, metal, glass, ceramics, and paper.

In recent years, an easily dismantlable adhesive has been studied. The easily dismantlable adhesive has both a sufficient adhesive strength depending on the purpose of use and a property of reducing the adhesive strength at any timing and allowing easy debonding (dismantling).

There is an increasing demand for such an easily dismantlable adhesive for purposes such as separation and collection of a joining material by which members of dissimilar materials are joined, repair and replacement of members, and an improvement in productivity by temporary adhesiveness in a production process.

As the dismantling method, for example, dismantling methods based on a stimulus such as heating, voltage application, light irradiation, and immersion in chemical solutions are studied. Examples of a dismantling method based on heating include thermal decomposition of a resin and an additive contained in adhesives, and expansion of additives. As an expansion agent, resin microcapsules containing liquid low-boiling point hydrocarbons, and inorganic expanding agents such as expandable graphite are used.

For example, Patent Literature 1 describes a joined body obtained by adhering adherends by a thermosetting adhesive composition, in which the thermosetting adhesive composition contains thermally expandable graphite.

Patent Literature 2 discloses an adhesive sheet for adhering a first non-metallic adherend member to a second non-metallic adherend member, and the adhesive sheet includes: adhesive layers made of a dismantlable adhesive having a glass transition temperature after curing of 80°C or higher; and a metal member sandwiched between a pair of the adhesive layers.

CITATION LIST

PATENT LITERATURE

Patent Literature 1:JP2004-189856A
Patent Literature 2:JP2010-106193A

SUMMARY OF INVENTION

TECHNICAL PROBLEM

However, the thermosetting adhesive composition described in Patent Literature 1 is in a liquid state, and thus, the adherend cannot be held until the thermosetting adhesive composition cures, resulting in poor workability.

In addition, the adhesive sheet described in Patent Literature 2 has poor pressure-sensitive adhesiveness for bonding the adherends, and a holding force until the adherends are bonded is not sufficient. In a working environment, the adhesive may be deviated from an original position thereof on the adherend until the adhesive cures.

The present invention has been made in view of the above circumstances, and an object thereof is to provide an easily dismantling adhesive sheet having excellent pressure-sensitive adhesiveness. Another object of the present invention is to provide a laminated body using the above-described easily dismantling adhesive sheet, a joined body having excellent dismantlability, a method for producing a joined body, and a method for dismantling a joined body.

SOLUTION TO PROBLEM

The present inventors conducted intensive studies to solve the above problems. As a result, the present inventors have found that, using an easily dismantling adhesive sheet which has a layer having pressure-sensitive adhesiveness and adhesiveness containing an inorganic expanding agent and a resin and in which a pressure-sensitive adhesive strength of the layer having pressure-sensitive adhesiveness and adhesiveness is controlled to a specific range, excellent pressure-sensitive adhesiveness and an excellent holding force can be obtained, and a joined body exhibiting an excellent adhesive strength allowing adherends to firmly adhere to each other and a dismantlability allowing the joined body to be easily dismantled at a desired time can be obtained, and have completed the present invention.

A solution to the above problem is as follows.

<1>

An easily dismantling adhesive sheet having a layer having pressure-sensitive adhesiveness and adhesiveness containing an inorganic expanding agent and a resin, in which the layer having pressure-sensitive adhesiveness and adhesiveness has a pressure-sensitive adhesive strength of 1.0 N/20 mm or more.

<2>

The easily dismantling adhesive sheet according to <1>, in which the resin includes a first resin having a crosslinked structure.

<3>

The easily dismantling adhesive sheet according to <1>, in which the resin includes a second resin having a reactive functional group.

<4>

The easily dismantling adhesive sheet according to <1>, in which the layer having pressure-sensitive adhesiveness and adhesiveness contains the inorganic expanding agent in an amount of 1 mass% to 40 mass%.

<5>

The easily dismantling adhesive sheet according to <1>, further including a supporting substrate, in which the layer having pressure-sensitive adhesiveness and adhesiveness is provided on at least one surface of the supporting substrate.

<6>

The easily dismantling adhesive sheet according to <5>, in which the supporting substrate is a film-shaped substrate.

<7>

A laminated body obtained by bonding two or more adherends using the easily dismantling adhesive sheet according to any one of <1> to <6>.

<8>

A joined body obtained by joining two or more adherends using the easily dismantling adhesive sheet according to any one of <1> to <6>.

<9>

The joined body according to <8>, in which the easily dismantling adhesive sheet has a space in which the inorganic expanding agent expands.

<10>

A method for producing a joined body, the method including a joining step of joining the two or more adherends by curing the layer having pressure-sensitive adhesiveness and adhesiveness in the laminated body according to <7>.

<11>

A method for dismantling the joined body according to <8>, the method including a dismantling step of dismantling the joined body by applying a stimulus to the layer having pressure-sensitive adhesiveness and adhesiveness in the joined body.

ADVANTAGEOUS EFFECTS OF INVENTION

According to the present invention, it is possible to obtain an easily dismantling adhesive sheet which exhibits an excellent pressure-sensitive adhesive strength by which adherends can be easily bonded to each other and workability for adhesiveness can be improved, an excellent holding force by which deviation or peeling does not occur until the sheet adheres (joins) to the adherend by curing even in an environment where heat or stress is applied, and an excellent adhesive strength allowing adherends to firmly adhere to each other. The joined body obtained by joining with the easily dismantling adhesive sheet according to the present invention is excellent in the dismantlability that allows the joined body to be easily dismantled at a desired time.

BRIEF DESCRIPTION OF DRAWINGS

[FIG. 1] FIG. 1 is a schematic cross-sectional view showing an easily dismantling adhesive sheet according to an embodiment of the present invention.

[FIG. 2] FIG. 2 is a schematic cross-sectional view showing an easily dismantling adhesive sheet according to another embodiment of the present invention.

[FIG. 3] FIG. 3 is a schematic cross-sectional view showing a joined body obtained by joining with an easily dismantling adhesive sheet according to an embodiment of the present invention.

DESCRIPTION OF EMBODIMENTS

Hereinafter, the present invention will be described in detail with reference to the accompanying drawings, but the present invention is not limited to the following embodiments, and can be freely modified and implemented without departing from the gist of the present invention. In addition, the expression "to" indicating a numerical range is used in a meaning that numerical values described therebefore and thereafter are included as a lower limit value and an upper limit value.

In the present description, the term "pressure-sensitive adhesiveness and adhesiveness" refers to a property having both pressure-sensitive adhesiveness and adhesiveness. More specifically, the term "pressure-sensitive adhesiveness and adhesiveness" refers to a temporal property that the pressure-sensitive adhesiveness can be exhibited in early stages, and adhesiveness can be exhibited after curing (reaction).

The term "pressure-sensitive adhesiveness" means that two surfaces are temporarily joined to each other based on a cohesive force based on a chemical structure of a composition by sensing external pressure (micro pressure), and can be debonded as necessary.

The term "adhesiveness" means that the composition is subjected to a chemical reaction (curing) to form a cured product, and two surfaces can be firmly joined.

In the present description, the term "main component" refers to a component contained in an amount of more than 50 mass% unless otherwise specified.

In the present description, the percentage or the like based on mass has the same meaning as the percentage or the like based on weight.

[Easily Dismantling Adhesive Sheet]

An easily dismantling adhesive sheet according to an embodiment of the present invention includes a layer having pressure-sensitive adhesiveness and adhesiveness containing an inorganic expanding agent and a resin, and the layer having pressure-sensitive adhesiveness and adhesiveness has a pressure-sensitive adhesive strength of 1.0 N/20 mm or more.

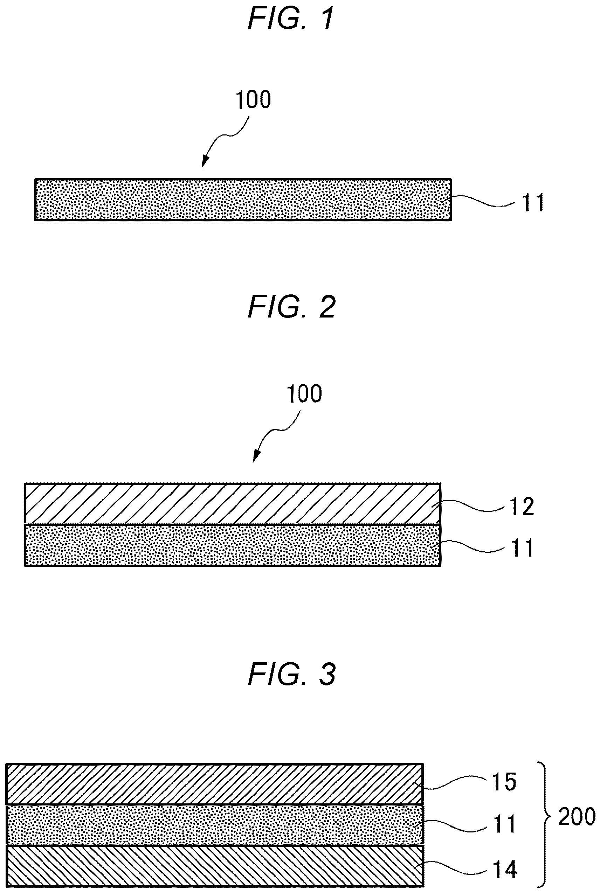

FIG. 1 is a schematic cross-sectional view showing an easily dismantling adhesive sheet according to an embodiment of the present invention. As shown in FIG. 1, an easily dismantling adhesive sheet 100 according to the present embodiment may include only a layer 11 having pressure-sensitive adhesiveness and adhesiveness. FIG. 1 shows a layer having pressure-sensitive adhesiveness and adhesiveness which has a single-layer structure, and the layer having pressure-sensitive adhesiveness and adhesiveness may have a multilayer structure with two or more layers.

The easily dismantling adhesive sheet according to the present embodiment may contain a supporting substrate as shown in FIG. 2. The easily dismantling adhesive sheet according to the present embodiment may include a pressure-sensitive adhesive layer or an adhesive layer other than the layer 11 having pressure-sensitive adhesiveness and adhesiveness. The pressure-sensitive adhesive layer and the adhesive layer other than the layer 11 having pressure-sensitive adhesiveness and adhesiveness are not particularly limited, and known pressure-sensitive adhesive layers and adhesive layers can be used depending on the application of the easily dismantling adhesive sheet, a material of the adherend, and the like.

FIG. 3 is a schematic cross-sectional view showing a joined body obtained by joining with an easily dismantling adhesive sheet according to an embodiment of the present invention. As shown in FIG. 3, the joined body obtained by joining with the easily dismantling adhesive sheet according to the embodiment of the present invention may be a joined body 200 obtained by joining a first member 14 and a second member 15 to each other as adherends via the layer 11 having pressure-sensitive adhesiveness and adhesiveness.

An easily dismantling adhesive sheet according to one embodiment of the present invention includes the above layer having pressure-sensitive adhesiveness and adhesiveness. The easily dismantling adhesive sheet according to the present embodiment may be a supporting substrate-supported sheet in a form having a layer having pressure-sensitive adhesiveness and adhesiveness on one surface (FIG. 2) or both surfaces of a sheet-shaped substrate (supporting substrate), or may be an easily dismantling adhesive sheet without a substrate, which is in a form in which a layer having pressure-sensitive adhesiveness and adhesiveness is held by a release sheet. Those referred to as a pressure-sensitive adhesive tape, a pressure-sensitive adhesive label, a pressure-sensitive adhesive film, and the like may fall within the concept of the easily dismantling adhesive sheet referred to herein.

The layer having pressure-sensitive adhesiveness and adhesiveness is typically formed continuously, and is not limited to this form. For example, a layer having pressure-sensitive adhesiveness and adhesiveness formed in a regular or random pattern such as a dot shape or a stripe shape may be used. The easily dismantling adhesive sheet according to the present embodiment may be in a roll shape or in a sheet shape. Alternatively, the easily dismantling adhesive sheet may be in a form further processed into various shapes.

<Layer Having Pressure-sensitive Adhesiveness and Adhesiveness>

The layer having pressure-sensitive adhesiveness and adhesiveness according to the embodiment of the present invention is a sheet-shaped layer containing an inorganic expanding agent and a resin. A pressure-sensitive adhesive strength of the layer having pressure-sensitive adhesiveness and adhesiveness is 1.0 N/20 mm or more.

The layer having pressure-sensitive adhesiveness and adhesiveness according to the embodiment of the present invention is bonded to an adherend and then cured, so that the layer having pressure-sensitive adhesiveness and adhesiveness can be firmly bonded to the adherend, and a joined body can be formed by joining two or more adherends to each other via the easily dismantling adhesive sheet (which may be the layer having pressure-sensitive adhesiveness and adhesiveness).

The curing of the layer having pressure-sensitive adhesiveness and adhesiveness is preferably performed by at least one reaction of polymerization or crosslinking of the resin contained in the layer having pressure-sensitive adhesiveness and adhesiveness. That is, the resin contained in the layer having pressure-sensitive adhesiveness and adhesiveness preferably has reactive functional groups. It is preferable that the layer having pressure-sensitive adhesiveness and adhesiveness according to the embodiment of the present invention can be further cured by at least one reaction of polymerization or crosslinking after being bonded to the adherend.

The layer having pressure-sensitive adhesiveness and adhesiveness is formed from a composition having pressure-sensitive adhesiveness and adhesiveness into a sheet shape.

The composition having pressure-sensitive adhesiveness and adhesiveness contains an inorganic expanding agent and a resin, can be formed into a sheet shape, and can form a layer having a pressure-sensitive adhesive strength of 1.0 N/20 mm or more.

(Inorganic Expanding Agent)

The layer having pressure-sensitive adhesiveness and adhesiveness (composition having pressure-sensitive adhesiveness and adhesiveness) according to the embodiment of the present invention contains an inorganic expanding agent. The layer having pressure-sensitive adhesiveness and adhesiveness contains the inorganic expanding agent, and therefore, when applying a stimulus to the layer having pressure-sensitive adhesiveness and adhesiveness, the inorganic expanding agent in the layer having pressure-sensitive adhesiveness and adhesiveness is expanded at a desired timing and breaks the layer having pressure-sensitive adhesiveness and adhesiveness to reduce the adhesive strength, so that the joined body can be dismantled.

The type of the stimulus is not particularly limited, and examples thereof include a stimulus such as heat, electricity, light, and chemical reactions. Heat is preferred.

When the joined body is dismantled by the stimulus based on heat, heating is preferred.

During heating, only the layer having pressure-sensitive adhesiveness and adhesiveness may be heated or the entire joined body may be heated. The heating method is not particularly limited, and examples thereof include a heating oven, and heating by electromagnetic induction heating.

The heating temperature is preferably 130°C or higher, more preferably 150°C or higher, and still more preferably 180°C or higher. From the viewpoint of dismantling without deforming or altering the adherend, the heating temperature is preferably 400°C or lower, more preferably 370°C or lower, and still more preferably 350°C or lower.

Examples of the inorganic expanding agent include expandable graphite, vermiculite, silicates, wermlandite, aluminum phosphate, thaumasite, and hydrotalcite, and the expandable graphite is preferred.

The inorganic expanding agent may be used alone or in combination of two or more kinds thereof.

The expandable graphite is obtained by treating natural graphite, pyrolytic graphite, kish graphite, or the like with sulfuric acid, sodium nitrate, potassium permanganate, bromine, a halide, or the like to generate an interlayer compound between graphite layers. When the expansion graphite is subjected to a heat treatment at a high temperature, a gas is generated from the interlayer compound, and a space between the graphite layers is expanded in a direction perpendicular to a carbon plane.

The layer having pressure-sensitive adhesiveness and adhesiveness according to the embodiment of the present invention contains the inorganic expanding agent, and therefore, by applying heat to the joined body formed using the easily dismantling adhesive sheet, the inorganic expanding agent expands to easily break the layer having pressure-sensitive adhesiveness and adhesiveness, and the joined body can be dismantled without damaging the adherend.

When the expandable graphite is used as the inorganic expanding agent, an average particle diameter of particles in the expandable graphite before expansion is preferably 0.1 $\mu$m to 400 $\mu$m, and more preferably 10 $\mu$m to 200

μm. When the particle diameter is 1 μm or more, the degree of expansion is excellent, and when the particle diameter is 400 μm or less, the particles are easily dispersed in the easily dismantling adhesive sheet.

The expansion starting temperature is preferably 130°C to 400°C, and more preferably 180°C to 350°C in consideration of the temperature at which the layer having pressure-sensitive adhesiveness and adhesiveness made of the composition having pressure-sensitive adhesiveness and adhesiveness is formed and a relationship between the heat resistance and durability during use of the joined body and dismantlability.

The layer having pressure-sensitive adhesiveness and adhesiveness (composition having pressure-sensitive adhesiveness and adhesiveness) may contain an expansion aid as necessary.

An amount of the inorganic expanding agent to be used varies depending on the type thereof, and is preferably 1 mass% or more, more preferably 2 mass% or more, and still more preferably 5 mass% or more in the composition having pressure-sensitive adhesiveness and adhesiveness from the viewpoint of easily causing cohesive failure or interfacial failure in the layer having pressure-sensitive adhesiveness and adhesiveness. From the viewpoint of the pressure-sensitive adhesive strength of the layer having pressure-sensitive adhesiveness and adhesiveness, the amount of the inorganic expanding agent to be used is preferably 40 mass% or less, more preferably 35 mass% or less, and still more preferably 30 mass% or less.

In the easily dismantling adhesive sheet according to the embodiment of the present invention, the pressure-sensitive adhesive layer preferably contains the inorganic expanding agent in an amount of 1 mass% to 40 mass%.

(Resin)

The resin contained in the layer having pressure-sensitive adhesiveness and adhesiveness according to the embodiment of the present invention is not particularly limited. At least one kind of resin may be used, and two or more kinds of resins are preferably used.

The resin according to the embodiment of the present invention preferably includes a first resin having a crosslinked structure.

The resin according to the embodiment of the present invention preferably includes a second resin having a reactive functional group.

The layer having pressure-sensitive adhesiveness and adhesiveness according to the embodiment of the present invention more preferably contains two or more kinds of resins having different functional groups, and still more preferably contains the first resin having a crosslinked structure and the second resin having a reactive functional group.

Here, the expression "having a crosslinked structure" means that the first resin has crosslinkable groups as functional groups and has a structure obtained by crosslinking at least a part of the crosslinkable groups, and may or may not contain an uncrosslinked crosslinkable group. In addition, the expression "having a reactive functional group" means that the second resin has an unreacted functional group, and the reactive functional group is a functional group capable of performing at least one reaction of polymerization or crosslinking. The second resin may or may not contain a crosslinked structure.

The layer having pressure-sensitive adhesiveness and adhesiveness according to the embodiment of the present invention may further contain a third resin different from the above first resin and second resin.

The resin contained in the layer having pressure-sensitive adhesiveness and adhesiveness corresponds to the resin contained in the composition having pressure-sensitive adhesiveness and adhesiveness forming the layer having pressure-sensitive adhesiveness and adhesiveness, and may be a resin in which at least a part of functional groups, such as crosslinkable groups contained in the resin contained in the composition having pressure-sensitive adhesiveness and adhesiveness forming the layer having pressure-sensitive adhesiveness and adhesiveness, is crosslinked.

Examples of the functional group of the resin contained in the composition having pressure-sensitive adhesiveness and adhesiveness include a functional group cured by heating or the like.

Specific examples of such a functional group include, but are not limited to, a carboxy group, an acid anhydride group, a hydroxy group, a sulfonic acid group, a sulfonic acid group, a phosphate group, an amino group, an amide group, an epoxy group, a cyano group, an isocyanate group, an alkoxysilyl group, an ethylenically unsaturated group (e.g., an acryloyl group, a methacryloyl group, a vinyl group, and an allyl group), and a benzophenone structure.

The resin according to the embodiment of the present invention preferably includes the first resin having a crosslinked structure and the second resin having a reactive functional group. The crosslinkable group corresponding to the crosslinked structure in the first resin is preferably different from the reactive functional group in the second resin.

The first resin is preferably a resin containing a crosslinked structure obtained by crosslinking at least a part of crosslinkable groups selected from a carboxy group, a hydroxy group, and an amino group.

It is preferable that at least a part of the functional groups of the first resin in the composition having pressure-sensitive adhesiveness and adhesiveness is crosslinked, the first resin has a crosslinked structure, and the layer having pressure-sensitive adhesiveness and adhesiveness is formed.

The second resin is preferably a resin containing a reactive functional group selected from a hydroxy group, an epoxy group, and an amide group.

Examples of the resin according to the embodiment of the present invention include various polymers such as acrylic polymers, rubber-based polymers, polyester-based polymers, urethane-based polymers, epoxy-based polymers, polyether-based polymers, silicone-based polymers, polyamide-based polymers, fluorine-based polymers, and thermoplastic resins, silicone compounds, and polyol compounds such as polypropylene glycol.

(First Resin)

In the layer having pressure-sensitive adhesiveness and adhesiveness according to the embodiment of the present invention, the resin preferably includes the first resin having a crosslinked structure.

In the layer having pressure-sensitive adhesiveness and adhesiveness according to the embodiment of the present invention, the first resin has a crosslinked structure, so that the cohesive force and the pressure-sensitive adhesive strength of the component having pressure-sensitive adhesiveness and adhesiveness are improved, and the pressure-sensitive adhesive strength is easily set to 1.0 N/20 mm or more.

In the present embodiment, the type of the first resin is not particularly limited, and those known in the field of pressure-sensitive adhesives can be used. For example, one or two or more kinds of polymers such as an acrylic polymer, a rubber-based polymer, a polyester-based polymer, a urethane-based polymer, a polyether-based polymer, a silicone-based polymer, a polyamide-based polymer, and a fluorine-based polymer may be contained as the first resin. From the viewpoint of pressure-sensitive adhesive performance, cost, and the like, it is preferable to contain an acrylic polymer, a rubber-based polymer, or a urethane-based polymer as the first resin. Among them, the acrylic polymer is more preferably used as the first resin from the viewpoint of adjusting the pressure-sensitive adhesive strength of the layer having pressure-sensitive adhesiveness and adhesiveness to a specific range. Hereinafter, a layer having pressure-sensitive adhesiveness and adhesiveness containing an acrylic polymer as the first resin will be mainly described, but the layer having pressure-sensitive adhesiveness and adhesiveness in the present embodiment is not intended to be limited to a layer formed of an acrylic polymer.

The term "acrylic polymer" refers to a polymer containing a monomer unit derived from a monomer having at least one (meth)acryloyl group in one molecule as a monomer unit constituting the polymer. Hereinafter, a monomer having at least one (meth)acryloyl group in one molecule is also referred to as an "acrylic monomer". Therefore, the acrylic polymer in this description is defined as a polymer containing a monomer unit derived from an acrylic monomer. A typical example of the acrylic polymer is an acrylic polymer in which a proportion of the acrylic monomer is more than 50 mass% with respect to the total monomer components used for the synthesis of the acrylic polymer.

The term "(meth)acryloyl" comprehensively refers to acryloyl and methacryloyl. Similarly, the term "(meth)acrylate" comprehensively refers to acrylate and methacrylate, and the term "(meth)acrylic" comprehensively refers to acrylic and methacrylic.

The (meth)acrylate is an alkyl methacrylate and/or an alkyl acrylate, and specific examples thereof include an alkyl (meth)acrylate having 1 to 20 carbon atoms, such as methyl(meth)acrylate, ethyl(meth)acrylate, propyl(meth) acrylate, isopropyl(meth)acrylate, butyl(meth)acrylate, isobutyl(meth)acrylate, s-butyl(meth)acrylate, t-butyl(meth)acrylate, n-butyl(meth)acrylate, pentyl(meth)acrylate, isopentyl(meth)acrylate, hexyl(meth)acrylate, heptyl(meth)acrylate, octyl(meth)acrylate, 2-ethylhexyl(meth)acrylate, isooctyl(meth)acrylate, nonyl(meth)acrylate, isononyl(meth)acrylate, decyl(meth)acrylate, isodecyl(meth)acrylate, undecyl(meth)acrylate, dodecyl(meth)acrylate, tridecyl(meth)acrylate, tetradecyl(meth)acrylate, pentadecyl(meth)acrylate, hexadecyl(meth)acrylate, heptadecyl(meth)acrylate, octadecyl(meth) acrylate, nondecyl(meth)acrylate, and eicosyl(meth)acrylate.

The (meth)acrylate is preferably an alkyl(meth)acrylate having 2 to 14 carbon atoms, and more preferably an alkyl(meth)acrylate having 4 to 9 carbon atoms.

The (meth)acrylate may be used alone or in combination of two or more kinds thereof.

A blending proportion of the (meth)acrylate is, for example, 70 mass% or more, preferably 80 mass% or more, and is, for example, 99 mass% or less, and preferably 98 mass% or less, with respect to the monomer components.

The monomer component may also further contain a copolymerizable monomer copolymerizable with the (meth) acrylate.

Examples of the copolymerizable monomer include: carboxy group-containing monomers or acid anhydrides thereof such as (meth)acrylic acid, itaconic acid, maleic acid, crotonic acid, and maleic anhydride; hydroxyl group-containing (meth)acrylates such as 2-hydroxyethyl(meth)acrylate and 3-hydroxypropyl(meth)acrylate; amide group-containing monomers such as (meth)acrylamide, N,N-dimethyl(meth)acrylamide, N-methylol(meth)acrylamide, N-methoxymethyl(meth)acrylamide, and N-butoxymethyl(meth)acrylamide; vinyl esters such as vinyl acetate; aromatic vinyl compounds such as styrene and vinyl toluene; (meth)acrylonitrile; N-(meth)acryloylmorpholine; and N-vinyl-2-pyrrolidone.

The copolymerizable monomer is preferably a carboxy group-containing monomer or a hydroxyl group-containing (meth)acrylate, and more preferably (meth)acrylic acid or 2-hydroxyethyl(meth)acrylate.

These copolymerizable monomers may be used alone or in combination of two or more kinds thereof. A combination of a carboxy group-containing monomer and a hydroxyl group-containing (meth)acrylate is preferred, and a combination of (meth)acrylic acid and 2-hydroxyethyl(meth)acrylate is more preferred.

A blending proportion of the copolymerizable monomer is, for example, 0.1 parts by mass or more, and preferably 0.3 parts by mass or more, and is, for example, 15 parts by mass or less, and preferably 10 parts by mass or less, with respect to 100 parts by mass of (meth)acrylate.

In order to cause a reaction of the monomer components, for example, (meth)acrylate and optionally a copolymerizable monomer are blended to prepare a monomer component, and the monomer component reacts by a known polymerization method such as solution polymerization, bulk polymerization, emulsion polymerization, or various kinds of radical polymerization.

The polymerization method is preferably solution polymerization.

In the solution polymerization, for example, a monomer component and a polymerization initiator are blended in a solvent to prepare a monomer solution, and then the monomer solution is heated.

Examples of the solvent include an organic solvent. Examples of the organic solvent include: aromatic solvents such as toluene, benzene, and xylene; ether solvents such as tetrahydrofuran; ketone solvents such as acetone and methyl ethyl ketone; ester solvents such as ethyl acetate; and amide solvents such as N,N-dimethylformamide. The solvent may be used alone or in combination of two or more kinds thereof, and a combination of an aromatic solvent and an ester solvent is preferred. A blending proportion of the solvent is, for example, 10 parts by mass or more, and preferably 50 parts by mass or more, and is, for example, 1000 parts by mass or less, and preferably 500 parts by mass or less, with respect to 100 parts by mass of the monomer components.

Examples of the polymerization initiator include a peroxide-based polymerization initiator and an azo-based polymerization initiator.

Examples of the peroxide-based polymerization initiator include organic peroxides such as peroxycarbonate, ketone peroxide, peroxyketal, hydroperoxide, dialkyl peroxide, diacyl peroxide, and peroxy ester.

Examples of the azo-based polymerization initiator include azo compounds such as 2,2'-azobisisobutyronitrile, 2,2'-azobis(2-methylbutyronitrile), 2,2'-azobis(2,4-dimethylvaleronitrile), and 2,2'-azobisisobutyric acid dimethyl.

Preferred examples of the polymerization initiator include an azo-based polymerization initiator.

A blending proportion of the polymerization initiator is, for example, 0.01 parts by mass or more, and preferably 0.05 parts by mass or more, and is, for example, 5 parts by mass or less, and preferably 3 parts by mass or less, with respect to 100 parts by mass of the monomer components.

The heating temperature is, for example, 50°C or higher and 80°C or lower The heating time is, for example, 1 hour or longer and 24 hours or shorter.

Accordingly, the monomer components are polymerized to obtain an acrylic polymer solution containing an acrylic polymer.

The blending proportion of the first resin is, for example, 0 part by mass or more, preferably 1 part by mass or more, and more preferably 5 parts by mass or more, and is, for example, 100 parts by mass or less, preferably 90 parts by mass or less, and more preferably 80 parts by mass or less, based on 100 parts by mass of all the resin components in the composition having pressure-sensitive adhesiveness and adhesiveness.

(Second Resin)

The second resin according to the embodiment of the present invention is preferably a resin having a reactive functional group. Examples of the reactive functional group include a hydroxy group, an epoxy group, and an amide group, and an epoxy group is preferred.

Examples of the second resin according to the embodiment of the present invention include an epoxy resin, a phenol resin, and an acrylic resin. An epoxy resin is preferably contained as the second resin. Accordingly, the easily dismantling adhesive sheet and the adherend can easily and firmly adhere to each other. Two or more adherends can easily and firmly adhere to each other via the easily dismantling adhesive sheet.

Examples of the epoxy resin include: bisphenol-based epoxy resins such as a bisphenol A epoxy resin, a bisphenol F epoxy resin, a bisphenol S epoxy resin, and a hydrogenated bisphenol A epoxy resin; a naphthalene epoxy resin; a biphenyl epoxy resin; a dicyclo epoxy resin; an alicyclic epoxy resin; a triglycidyl isocyanurate epoxy resin; a hydantoin epoxy resin; a glycidyl ether-based epoxy resin; and a glycidylamino-based epoxy resin.

The epoxy resin is preferably a bisphenol-based epoxy resin, and more preferably a bisphenol A epoxy resin.

The epoxy resin can be used alone or in combination of two or more kinds thereof.

The epoxy resin may be in any of liquid, semi-solid, and solid forms at room temperature, and preferred examples thereof include a semi-solid epoxy resin used alone, and a liquid epoxy resin and a solid epoxy resin used in combination. Accordingly, a tacky layered layer having pressure-sensitive adhesiveness and adhesiveness is easily formed from the composition having pressure-sensitive adhesiveness and adhesiveness.

The liquid epoxy resin at room temperature is specifically a liquid at 25°C. The viscosity of the liquid epoxy resin at 25°C is, for example, 30 Pa·s or more, preferably 80 Pa·s or more, and is, for example, 500 Pa·s or less, preferably 300 Pa·s or less.

The solid epoxy resin at room temperature is specifically a solid at 25°C. The softening point of the solid epoxy resin is, for example, 50°C or higher, and preferably 55°C or higher.

A blending proportion of the second resin is, for example, 0 parts by mass or more, preferably 5 parts by mass or more, more preferably 10 parts by mass or more, and still more preferably 15 parts by mass or more, and is, for example, 95 parts by mass or less, preferably 90 parts by mass or less, and more preferably 85 parts by mass or less, based on 100 parts by mass of the total resin components in the composition having pressure-sensitive adhesiveness and adhesiveness.

(Third Resin)

The layer having pressure-sensitive adhesiveness and adhesiveness according to the embodiment of the present invention may further contain a third resin different from the above first resin and the above second resin.

Examples of the third resin include resins different from the resins selected as the above first resin and second resin, and the third resin is preferably selected from resins not having a crosslinked structure and a reactive functional group that reacts with a component contained in the layer having pressure-sensitive adhesiveness and adhesiveness.

The third resin is preferably a thermoplastic resin. Examples of the thermoplastic resin include natural rubber, butyl rubber, isoprene rubber, chloroprene rubber, a thermoplastic acrylic resin, an ethylene-vinyl acetate copolymer, an ethylene-acrylic acid copolymer, an ethylene-acrylic acid ester copolymer, a polybutadiene resin, a polycarbonate resin, a thermoplastic polyimide resin, a polyamide resin such as polyamide 6 or polyamide 6,6, a phenoxy resin, a vinyl butyral resin, an acrylic resin, a saturated polyester resin such as PET or PBT, a polyamide imide resin, and a fluororesin. The thermoplastic resin is preferably selected from the group consisting of a phenoxy resin, a thermoplastic acrylic resin, and a polyvinyl butyral resin.

The third resin may be a commercially available product. Examples of commercially available products of the phenoxy resin include "jER 1256", "jER 1256 B40", and "jER 4250" (manufactured by Mitsubishi Chemical Corporation), "YP-50S", "YP-50", "YP-70", and "FX-316" (manufactured by Nippon Steel Chemical & Material Co., Ltd.). Examples of thermoplastic acrylic resins include "Nanostrength M-22" and "Nanostrength M-22N" (manufactured by Arkema). Examples of commercially available products of polyvinyl butyral resins include "Butvar B-79" and "Butvar B-72" (manufactured by Eastman Chemical Corporation).

Only one kind of the above thermoplastic resin may be used, or two or more kinds thereof may be used in combination. The above thermoplastic resin is preferably a phenoxy resin or a thermoplastic acrylic resin, and more preferably a phenoxy resin, from the viewpoint of improving the cohesive force of the layer having pressure-sensitive adhesiveness and adhesiveness due to high heat resistance.

A blending proportion of the third resin is, for example, 0 part by mass or more, preferably 1 part by mass or more, and more preferably 5 parts by mass or more, and is, for example, 50 parts by mass or less, preferably 40 parts by mass or less, and more preferably 30 parts by mass or less, based on 100 parts by mass of the total resin components in the composition having pressure-sensitive adhesiveness and adhesiveness.

A blending proportion of the first resin to the second resin to the third resin (first resin: second resin: third resin) is preferably 0 to 100:0 to 100:0 to 50 (here, at least one of the first resin and the second resin is more than 0), more preferably 1 to 90: 1 to 90: 1 to 40, and still more preferably 5 to 80:5 to 80:5 to 30 in parts by mass.

(Crosslinking Agent)

When the first resin having a crosslinked structure is blended in the composition having pressure-sensitive adhesiveness and adhesiveness, a crosslinking agent may be blended in preparing the composition having pressure-sensitive adhesiveness and adhesiveness. Accordingly, a layer having pressure-sensitive adhesiveness and adhesiveness can be formed. In addition, the pressure-sensitive adhesive strength of the layer having pressure-sensitive adhesiveness and adhesiveness can be easily set in a specific range.

Examples of the crosslinking agent include an isocyanate-based crosslinking agent, an aziridine-based crosslinking agent, an epoxy-based crosslinking agent, and a metal chelate-based crosslinking agent, and an isocyanate-based crosslinking agent is preferred.

Examples of the isocyanate-based crosslinking agent include: aromatic diisocyanates such as tolylene diisocyanate and xylene diisocyanate; alicyclic diisocyanates such as isophorone diisocyanate; aliphatic diisocyanates such as hexamethylene diisocyanate; and a modified product of these isocyanates (specifically, a tolylene diisocyanate adduct of trimethylolpropane or the like).

The crosslinking agent is preferably a modified product of an isocyanate.

A blending proportion of the crosslinking agent is, for example, 1 part by mass or more and preferably 3 parts by mass or more, and is, for example, 20 parts by mass or less and preferably 15 parts by mass or less, with respect to 100 parts by mass of the first resin. Accordingly, the pressure-sensitive adhesive strength of the layer having pressure-sensitive adhesiveness and adhesiveness may be adjusted.

(Curing Agent)

A curing agent may also be blended in the composition having pressure-sensitive adhesiveness and adhesiveness. Accordingly, the layer having pressure-sensitive adhesiveness and adhesiveness is cured to improve the adhesive strength to the adherend, and the easily dismantling adhesive sheet having excellent adhesive strength is easily obtained.

The curing agent is a component that reacts with the resin contained in the composition having pressure-sensitive adhesiveness and adhesiveness to cure the pressure-sensitive adhesive. The curing agent may be appropriately selected, depending on the type and composition of the resin to be used, from curing agents capable of curing the resin.

For example, when the resin contains an epoxy resin, the curing agent is preferably an epoxy resin curing agent.

The epoxy resin curing agent may be a thermosetting or photocurable curing agent, and is preferably a thermosetting curing agent.

The epoxy resin curing agent may be, for example, a nitrogen-containing curing agent that contains nitrogen atoms and reacts with an epoxy group. Examples of the curing agent include tetramethylguanidine, imidazole or a derivative thereof, carboxylic acid hydrazides, tertiary amines, aromatic amines, aliphatic amines, and dicyandiamide or a derivative thereof.

Specific examples of the epoxy resin curing agent include dicyandiamide, 3-methyl-1,2,3,6-tetrahydrophthalic anhydride, 4-methyl-1,2,3,6-tetrahydrophthalic anhydride, diethylenetriamine, and triethylenetetramine.

As the epoxy resin curing agent, a commercially available product may be used. Among the epoxy resin curing agents, examples of commercially available products of dicyandiamide include "EH3636AS" (manufactured by ADEKA Corporation), dicyandiamide DD (manufactured by Nippon Carbide Industries Co., Inc.), and DICY7 and DICY15 (manufactured by Mitsubishi Chemical Corporation).

When dicyandiamide is used as the curing agent, the blending proportion is, for example, 1 mass% or more, preferably 3 mass% or more, and is, for example, 20 mass% or less, with respect to the pressure-sensitive adhesive composition. When the blending proportion of the curing agent is equal to or greater than the above lower limit, the layer having pressure-sensitive adhesiveness and adhesiveness has excellent adhesiveness.

A curing accelerator may be blended optionally in the composition having pressure-sensitive adhesiveness and adhesiveness.

Examples of the curing accelerator include imidazole-based compounds, tertiary amine-based compounds, phosphine-based compounds, and urea-based compounds. As the imidazole-based compound, Shikoku Chemicals Corporation has marketed various grades of the "Curezol" series, and among them, for example, "Curezol 2MZA-PW" (manufactured by Shikoku Chemicals Corporation), "Curezol 2PHZ-PW" (manufactured by Shikoku Chemicals Corporation), and "Curezol 2MA-OK" (manufactured by Shikoku Chemicals Corporation) can be suitably used. Examples of the urea-based compound include Omicure U-52 (manufactured by CVC Thermoset Specialities) and 3-(3,4-dichlorophenyl)-1,1-dimethylurea (DCMU) (manufactured by Hodogaya Chemical Co., Ltd.).

The curing accelerator may be used alone or in combination of two or more kinds thereof.

A blending proportion of the curing accelerator can be appropriately selected depending on the types of the curing agent and the curing accelerator.

The composition having pressure-sensitive adhesiveness and adhesiveness may contain an appropriate additive depending on the application of the easily dismantling adhesive sheet. Examples of such an additive include a tackifier (for example, a tackifier that is solid, semisolid, or liquid at room temperature, which is made of a rosin derivative resin, a polyterpene resin, a petroleum resin, and an oil-soluble phenol resin), a leveling agent, a crosslinking aid, a plasticizer, a softener, an antistatic agent, an antiradiation absorbent, a filler, an antioxidant, an antioxidant, a light stabilizer, a colorant (a pigment, a dye, or the like), and a foaming agent.

As for such various additives, commonly known additives can be used according to a general method, and a detailed description thereof will be omitted because they do not particularly characterize the present invention.

A method for preparing a composition having pressure-sensitive adhesiveness and adhesiveness is not particularly limited, and for example, a composition having pressure-sensitive adhesiveness and adhesiveness can be obtained using a rotation and revolution stirrer by preparing a liquid composition containing each component and a solvent.

Then, the layer having pressure-sensitive adhesiveness and adhesiveness may be formed into a sheet by applying the composition having pressure-sensitive adhesiveness and adhesiveness onto a substrate, performing drying, and removing the solvent.

When the composition having pressure-sensitive adhesiveness and adhesiveness is applied to form the layer having pressure-sensitive adhesiveness and adhesiveness, for example, a common coater such as a gravure roll coater, a reverse roll coater, a kiss roll coater, a dip roll coater, a bar coater, a knife coater, or a spray coater can be used. In the easily dismantling adhesive sheet in the form having a supporting substrate described below, as a method for providing a layer having pressure-sensitive adhesiveness and adhesiveness on the supporting substrate, a direct method for forming the layer having pressure-sensitive adhesiveness and adhesiveness by directly applying a composition having pressure-sensitive adhesiveness and adhesiveness to a supporting substrate may be used, or a transfer method for transferring a layer having pressure-sensitive adhesiveness and adhesiveness formed on a debonded surface to a supporting substrate may be used.

In another method for preparing a composition having pressure-sensitive adhesiveness and adhesiveness, the components are heated and kneaded using a kneading machine such as a biaxial kneader or a kneader to obtain the composition having pressure-sensitive adhesiveness and adhesiveness. The easily dismantling adhesive sheet may be obtained by forming the layer having pressure-sensitive adhesiveness and adhesiveness into a sheet shape by compressing and stretching the composition having pressure-sensitive adhesiveness and adhesiveness by calendar molding, extrusion molding, press molding, or the like.

The thickness of the layer having pressure-sensitive adhesiveness and adhesiveness is not particularly limited. The above thickness is, for example, 1 $\mu$m or more, preferably 5 $\mu$m or more, and more preferably 10 $\mu$m or more, and is, for example, 3000 $\mu$m or less, preferably 1000 $\mu$m or less, and more preferably 500 $\mu$m or less.

(Pressure-sensitive Adhesive Strength of Layer Having Pressure-Sensitive Adhesiveness and Adhesiveness)

The pressure-sensitive adhesive strength of the layer having pressure-sensitive adhesiveness and adhesiveness is 1.0 N/20 mm or more. That is, the layer having pressure-sensitive adhesiveness and adhesiveness has pressure-sensitive adhesiveness before curing.

The pressure-sensitive adhesive strength before curing refers to a pressure-sensitive adhesive strength of the layer having pressure-sensitive adhesiveness and adhesiveness before curing, and specifically refers to a pressure-sensitive adhesive strength measured after the layer having pressure-sensitive adhesiveness and adhesiveness is formed of the composition having pressure-sensitive adhesiveness and adhesiveness and before the layer having pressure-sensitive adhesiveness and adhesiveness is cured.

The pressure-sensitive adhesive strength of the layer having pressure-sensitive adhesiveness and adhesiveness according to the embodiment of the present invention is necessarily 1 N/20 mm or more, preferably 1.5 N/20 mm or more, and more preferably 2 N/20 mm or more.

The pressure-sensitive adhesive strength of the present layer having pressure-sensitive adhesiveness and adhesiveness can be measured by performing a peeling pressure-sensitive adhesive strength test in accordance with JIS Z 0237. That is, a polyethylene terephthalate film having a thickness of 25 $\mu$m (trade name: "Lumirror 25S10", manufactured by Toray Industries, Inc.) is placed on one surface of the layer having pressure-sensitive adhesiveness and adhesiveness of the easily dismantling adhesive sheet.

Next, the thus-obtained sheet was cut in a width of 20 mm, the other surface of the layer having pressure-sensitive adhesiveness and adhesiveness is placed on a stainless steel plate (SUS304 BA) having a thickness of 2 mm and bonded thereto, and then, a 2 kg roller is moved back and forth once to press the plate and the sheet together.

After 30 minutes from the bonding, an adhesive strength at debonding is measured at a debonding angle of 180° and a debonding rate of 300 mm/min using a tensile compression tester (device name "AGS-50NX" manufactured by Shimadzu Corporation).

When the layer having pressure-sensitive adhesiveness and adhesiveness has a pressure-sensitive adhesive strength as described above, before the layer having pressure-sensitive adhesiveness and adhesiveness is cured, the easily dismantling adhesive sheet can be bonded to an adherend by the pressure-sensitive adhesive strength of the layer having pressure-sensitive adhesiveness and adhesiveness, and positioning and temporary fixing are facilitated.

Thereafter, the layer having pressure-sensitive adhesiveness and adhesiveness can be cured and joined to an adherend, or two or more adherends can be joined via the easily dismantling adhesive sheet.

(Supporting Substrate)

As described above, the easily dismantling adhesive sheet according to the present embodiment may include a supporting substrate as shown in FIG. 2. That is, the easily dismantling adhesive sheet according to the present embodiment may further include a supporting substrate, and the layer having pressure-sensitive adhesiveness and adhesiveness may be provided on at least one surface of the supporting substrate. Accordingly, the easily dismantling pressure-sensitive adhesive sheet can be accurately processed by punching or the like. Such an easily dismantling adhesive sheet is also preferable for applications in which the easily dismantling adhesive sheet is processed into a specific shape or is used with a small width.

The thickness of the supporting substrate in the present embodiment is preferably 100 $\mu$m or less, more preferably 80 $\mu$m or less, still more preferably 70 $\mu$m or less, yet still more preferably 50 $\mu$m or less, and particularly preferably 30 $\mu$m or less. In one aspect, the thickness of the supporting substrate may be 20 $\mu$m or less, 12 $\mu$m or less, 7 $\mu$m or less, or 3 $\mu$m or less. The lower limit of the thickness of the supporting substrate is not particularly limited. From the viewpoint of handleability, processability, and the like of the easily dismantling adhesive sheet, the thickness of the supporting substrate is generally 0.5 $\mu$m or more (for example, 1 $\mu$m or more). In one aspect, the thickness of the supporting substrate may be 3 $\mu$m or more. In another aspect, the thickness of the supporting substrate may be 8 $\mu$m or more, 13 $\mu$m or more, or 16 $\mu$m or more.

The structure and material of the supporting substrate are not particularly limited, and the supporting substrate is typically a film-shaped substrate (also referred to as "substrate film"). As the substrate film, a film including a resin film as a base film can be preferably used. The above base film is typically a (independent) member capable of maintaining a shape thereof independently. The substrate film according to the present embodiment may be substantially include such a base film. Alternatively, the above substrate film may include an auxiliary layer in addition to the above base film. Examples of the auxiliary layer include a coloring layer, a reflective layer, an undercoat layer, and an antistatic layer provided on the surface of the above base film. The substrate film may be a porous film.

The porous film is not particularly limited as long as it has a plurality of pores in the film (as long as pores are formed), and examples thereof include a foam film and a nonwoven fabric.

The easily dismantling adhesive sheet according to the embodiment of the present invention preferably has a space, therein, in which the inorganic expanding agent expands. Therefore, when the substrate film is a porous film, the pores (spaces) of the porous film facilitate the expansion of the expanding agent, and the joined body can be dismantled more easily when the inorganic expanding agent expands.

The above resin film is a film containing a resin material as a main component (for example, a component contained in the resin film in an amount of more than 50 mass%). Examples of the resin film include: polyolefin resin films such as polyethylene (PE), polypropylene (PP), and an ethylene-propylene copolymer; polyester resin films such as polyethylene terephthalate (PET), polybutylene terephthalate (PBT), and polyethylene naphthalate (PEN); polyurethane resin films; vinyl chloride resin films; vinyl acetate resin films; polyimide resin films; polyamide resin films; fluororesin films; and cellophane. The resin film may be a rubber-based film such as a natural rubber film or a butyl rubber film. Among them, polyester films are preferred from the viewpoint of handling properties and processability, and among them, PET films are particularly preferred.

<Application>

The easily dismantling adhesive sheet according to the embodiment of the present invention is suitable for fixing or joining a metal component, a resin component, a metal-resin composite component, and the like used in a boat, an aircraft, an automatic vehicle, and the like. Among them, an automatic vehicle battery, a body, a motor, and the like are required to be separated and collected in view of environmental problems, and dismantling may be required. The easily dismantling adhesive sheet according to the embodiment of the present invention is excellent in processing accuracy due to the sheet shape thereof, and therefore, the easily dismantling adhesive sheet is suitable for applications in which the easily dismantling adhesive sheet can be processed into a specific shape or used with a small width, for example, for fixing or joining members in a portable electronic device. Such an electronic device such as a portable electronic device may need to be dismantled for the purpose of, for example, separation and collection, repair and replacement of members, and an improvement in productivity by temporary bonding in a production process.

The easily dismantling adhesive sheet according to the embodiment of the present invention can be used for joining various adherends. The easily dismantling adhesive sheet according to the embodiment of the present invention can be suitably used for bonding of adherends of dissimilar materials which need to be separated and collected or temporarily fixing a member because the layer having pressure-sensitive adhesiveness and adhesiveness can be easily broken by a stimulus such as heating and the joined body can be dismantled without damaging the adherend.

[Laminated Body, Joined Body, Method for Producing Joined Body, and Method for Dismantling Joined Body]

The easily dismantling adhesive sheet according to the embodiment of the present invention can be used for a laminated body, a joined body, and a method for producing the joined body.

The laminated body according to the embodiment of the present invention is a laminated body obtained by bonding two or more adherends to each other by using the easily dismantling adhesive sheet according to the embodiment of the present invention.

The joined body according to the embodiment of the present invention is a joined body obtained by joining two or more adherends using the easily dismantling adhesive sheet according to the embodiment of the present invention.

When two or more adherends are bonded or joined to each other by using the easily dismantling adhesive sheet according to the embodiment of the present invention, the easily dismantling adhesive sheet is preferably a sheet without a substrate, which is formed of only a layer having pressure-sensitive adhesiveness and adhesiveness, a sheet including the layer having pressure-sensitive adhesiveness and adhesiveness on both surfaces of a supporting substrate, or a sheet including the layer having pressure-sensitive adhesiveness and adhesiveness on one surface of the supporting substrate and another pressure-sensitive adhesive layer or an adhesive layer on the other surface.

That is, in the laminated body and the joined body according to the embodiment of the present invention, a supporting substrate, another pressure-sensitive adhesive layer, or another adhesive layer other than the layer having pressure-sensitive adhesiveness and adhesiveness, or the like may be present between the adherend and the layer having pressure-sensitive adhesiveness and adhesiveness.

In the joined body according to the embodiment of the present invention, the easily dismantling adhesive sheet preferably has a space in which the inorganic expanding agent expands.

The space of the easily dismantling adhesive sheet in which the inorganic expanding agent expands is not particularly limited, and examples thereof include voids in the supporting substrate. When the easily dismantling adhesive sheet has the supporting substrate and the supporting substrate is, for example, a porous film, the holes (spaces) of the porous film facilitate the expansion of the expanding agent, and the joined body can be dismantled more easily when the inorganic expanding agent expands.

A method for producing the joined body according to the embodiment of the present invention includes a joining step of joining the above two or more adherends by curing the layer having pressure-sensitive adhesiveness and adhesiveness in the laminated body according to the embodiment of the present invention.

A method for dismantling the joined body according to the embodiment of the present invention is a method for dismantling the joined body according to the embodiment of the present invention, and includes a dismantling step of dismantling the joined body by applying a stimulus to the layer having pressure-sensitive adhesiveness and adhesiveness in the joined body.

As for the easily dismantling adhesive sheet in the laminated body, the joined body, the method for producing the joined body, and the method for dismantling the joined body according to the embodiment of the present invention, the above description can be incorporated as it is.

In the joining method using the easily dismantling adhesive sheet configured as described above, for example, the easily dismantling adhesive sheet is placed between the first member and the second member which are adherends, and the first member and the second member are pressed together in a direction in which the first member and the second member are brought into close contact with each other, so that the first member and the second member are bonded to each other, and the laminated body can be obtained. Thereafter, the layer having pressure-sensitive adhesiveness and adhesiveness of the laminated body obtained by bonding using the easily dismantling adhesive sheet is cured to obtain a joined body obtained by joining the first member and the second member via the easily dismantling adhesive sheet (or the layer having pressure-sensitive adhesiveness and adhesiveness). By applying a stimulus such as heat to the layer having pressure-sensitive adhesiveness and adhesiveness, the inorganic expanding agent in the layer having pressure-sensitive adhesiveness and adhesiveness expands, and the layer having pressure-sensitive adhesiveness and adhesiveness in the joined body is broken. As a result, the joined body is dismantled without damaging the adherend, and the first member and the second member can be separated.

When joining and separating two or more members using the easily dismantling adhesive sheet as described above, it is preferable to satisfy a relationship $X \leq Y \leq Z$, in which X°C represents the temperature for forming a layer having pressure-sensitive adhesiveness and adhesiveness by the composition having pressure-sensitive adhesiveness and adhesiveness, Y°C represents the temperature for curing the layer having pressure-sensitive adhesiveness and adhesiveness, and Z°C represents the temperature for dismantling the joined body by breaking the layer having pressure-sensitive adhesiveness and adhesiveness. The relationship is independent of whether heat is used for formation, curing, or dismantling of the layer having pressure-sensitive adhesiveness and adhesiveness.

A material of the first member and the second member constituting the above adherend and laminated body is not particularly limited, and examples thereof include: metal materials such as copper, silver, gold, iron, tin, palladium, aluminum, nickel, titanium, chromium, zinc, and alloys containing two or more kinds thereof; various resin materials (typically plastic materials) such as polyimide resins, acrylic resins, polyether nitrile resins, polyethersulfone resins, polyester resins (polyethylene terephthalate resins, polyethylene phthalate resins, and the like), polyvinyl chloride resins, polyphenylene sulfide resins, polyether ether ketone resins, polyamide resins (so-called aramid resins and the like), polyarylate resins, polycarbonate resins, and liquid crystal polymers; and inorganic materials such as alumina, zirconia, soda glass, quartz glass, and carbon. The above adherend may be in the form of either a single layer structure or a multilayer structure, and various surface treatments may be performed on the surface (attaching surface) to which the easily dismantling adhesive sheet is attached.

As described above, the following matters are disclosed in the present description.

<1>

An easily dismantling adhesive sheet having a layer having pressure-sensitive adhesiveness and adhesiveness containing an inorganic expanding agent and a resin, in which the layer having pressure-sensitive adhesiveness and adhesiveness has a pressure-sensitive adhesive strength of 1.0 N/20 mm or more.

<2>

The easily dismantling adhesive sheet according to <1>, in which the resin includes a first resin having a crosslinked structure.

<3>

The easily dismantling adhesive sheet according to <1> or <2>, in which the resin includes a second resin having a reactive functional group.

<4>

The easily dismantling adhesive sheet according to any one of <1> to <3>, in which the layer having pressure-sensitive adhesiveness and adhesiveness contains the inorganic expanding agent in an amount of 1 mass% to 40 mass%.

<5>

The easily dismantling adhesive sheet according to any one of <1> to <4>, further including a supporting substrate, in which the layer having pressure-sensitive adhesiveness and adhesiveness is provided on at least one surface of the supporting substrate.

<6>

The easily dismantling adhesive sheet according to <5>, in which the supporting substrate is a film-shaped substrate.

<7>

A laminated body obtained by bonding two or more adherends using the easily dismantling adhesive sheet according to any one of <1> to <6>.

<8>

A joined body obtained by joining two or more adherends using the easily dismantling adhesive sheet according to any one of <1> to <6>.

<9>

The joined body according to <8>, in which the easily dismantling adhesive sheet has a space in which the inorganic expanding agent expands.

<10>

A method for producing a joined body, the method including a joining step of joining the two or more adherends by curing the layer having pressure-sensitive adhesiveness and adhesiveness in the laminated body according to <7>.

<11>

A method for dismantling the joined body according to <8> or <9>, the method including a dismantling step of dismantling the joined body by applying a stimulus to the layer having pressure-sensitive adhesiveness and adhesiveness in the joined body.

EXAMPLES

Hereinafter, the present invention will be described in more detail with reference to Examples, but the present invention is not limited to these Examples.

[Examples 1 to 8]

The components were blended in blending amounts shown in Table 1 and dissolved in methyl ethyl ketone (MEK) as a solvent, and heating and kneading were performed at 23°C for 15 minutes using a rotation and revolution stirrer to prepare a composition having pressure-sensitive adhesiveness and adhesiveness.

The composition having pressure-sensitive adhesiveness and adhesiveness was applied to a debonding-treated polyethylene terephthalate film (DIAFOIL MRF# 38, manufactured by Mitsubishi Chemical Corporation) with a bar coater, then the coated film was heated (dried) in a heating oven at 80°C for 5 minutes to remove the solvent, and was formed into a sheet shape so as to have a thickness of 50 $\mu$m, thereby forming a layer having pressure-sensitive adhesiveness and adhesiveness.

Thereafter, the layer having pressure-sensitive adhesiveness and adhesiveness was brought into contact with another polyethylene terephthalate film (DIAFOIL MRE#38 manufactured by Mitsubishi Chemical Corporation) so that the layer having pressure-sensitive adhesiveness and adhesiveness was sandwiched between the two polyethylene terephthalate films, thereby obtaining an easily dismantling adhesive sheet.

[Comparative Example 1]

All the resin components were sufficiently mixed at 120°C for 30 minutes using a pressure kneader in the blending amounts shown in Table 1, then a curing agent, a curing accelerator, and expandable graphite were added thereto, and the mixture was mixed at 80°C for 15 minutes to prepare a composition having pressure-sensitive adhesiveness and adhesiveness, thereby obtaining a liquid pressure-sensitive adhesive.

[Comparative Example 2]

All the resin components were sufficiently mixed at 120°C for 30 minutes using a pressure kneader in the blending amounts shown in Table 1, then a curing agent, a curing accelerator, and expandable graphite were added thereto, and the mixture was mixed at 80°C for 15 minutes to prepare a composition having pressure-sensitive adhesiveness and adhesiveness.

The composition having pressure-sensitive adhesiveness and adhesiveness heated at 80°C was applied to a debonding-treated polyethylene terephthalate film. Thereafter, the composition having pressure-sensitive adhesiveness and adhesiveness was brought into contact with another polyethylene terephthalate film so as to be sandwiched between the two polyethylene terephthalate films.

Using a press machine heated to 80°C, the two polyethylene terephthalate films with the pressure-sensitive adhesive/adhesive composition were press-molded into a sheet shape so as to have a thickness of 50 $\mu$m, thereby obtaining an easily dismantling adhesive sheet in Comparative Example 2.

<Measurement of Pressure-sensitive Adhesive Strength>

The pressure-sensitive adhesive strength of the layer having pressure-sensitive adhesiveness and adhesiveness before curing was measured in accordance with JIS Z 0237.

One polyethylene terephthalate film of the easily dismantling adhesive sheet was debonded, and a polyethylene terephthalate film having a thickness of 25 $\mu$m (trade name "Lumirror 25S10", manufactured by Toray Industries, Inc.) was placed on a surface of the exposed layer having pressure-sensitive adhesiveness and adhesiveness.

Next, the thus-obtained sheet was cut in a width of 20 mm, the other polyethylene terephthalate film was debonded, and a surface of the exposed layer having pressure-sensitive adhesiveness and adhesiveness was placed on a stainless steel plate (SUS304 BA) having a thickness of 2 mm. After the bonding, a 2 kg roller was moved back and forth once to press the plate and the sheet together.

After 30 minutes from the bonding, an adhesive strength at debonding was measured at a debonding angle of 180° and a debonding rate of 300 mm/min using a tensile compression tester (device name "AGS-50NX" manufactured by Shimadzu Corporation).

When the debonding state during the conduction of the test is the cohesive failure of the layer having pressure-sensitive adhesiveness and adhesiveness, it is not possible to correct the positional deviation after bonding, and Comparative Example 2 is unsuitable in terms of workability of the adhesive sheet.

When the adhesive strength at debonding is 1.0 N/20 mm or more, the adherends can be easily bonded to each other.

<Measurement of Holding Force>

The holding force of the layer having pressure-sensitive adhesiveness and adhesiveness before curing was measured in accordance with JIS Z 0237.

The easily dismantling adhesive sheet was cut into a size of 25 mm in width × 25 mm in length, one polyethylene terephthalate film was then debonded, and a distal end of a SUS304 BA plate of 50 mm in width × 100 mm in length × 2 mm in thickness was placed on a surface of the exposed layer having pressure-sensitive adhesiveness and adhesiveness.

Next, the other polyethylene terephthalate film was debonded.

Subsequently, an SUS304 BA plate of 30 mm in width × 50 mm in length × 0.5 mm in thickness was bonded to the layer having pressure-sensitive adhesiveness and adhesiveness to obtain a laminated body sample.

Next, an upper side of the SUS304 BA plate of 50 mm in width × 100 mm in length × 2 mm in thickness of a test sample was temporarily fixed, a load of 100 g was applied to a lower side of the SUS304 BA plate of 30 mm in width × 50 mm in length × 0.5 mm in thickness of the test sample, and whether the test sample could be held in an environment of 130°C for 60 minutes without shearing or the like was checked.

After holding for 60 minutes, an amount of change from the initial attachment position was measured and defined as the holding force (mm). A measurement value of the holding force of 5 mm or less can be determined to be good.

<Measurement of Adhesive Strength at Shearing>

The adhesive strength at shearing of the layer having pressure-sensitive adhesiveness and adhesiveness after curing was measured in accordance with JIS K 6850.

[Examples 1 to 7 and Comparative Example 2]

An easily dismantling adhesive sheet was cut into a size of 25 mm in width × 10 mm in length, one polyethylene terephthalate film was then debonded, and a distal end of an SPCC-SD steel plate of 25 mm in width × 100 mm in length × 2 mm in thickness was placed on the exposed layer having pressure-sensitive adhesiveness and adhesiveness. Next, the other polyethylene terephthalate film was debonded.
Subsequently, another SPCC-SD steel plate was bonded to a surface of the layer having pressure-sensitive adhesiveness and adhesiveness to obtain a laminated body sample.
Subsequently, the laminated body was fixed with a clip and stored in a heating oven at 130°C for 60 minutes to cure the layer having pressure-sensitive adhesiveness and adhesiveness, thereby obtaining a joined body.
Thereafter, the clip was removed, the two SPCC-SD steel plates in the joined body were pulled at a debonding rate of 5 mm/min in a shearing direction (length direction) by a tensile compression tester (device name "TG-10 kN", manufactured by Minebea Co., Ltd.), and a test force by which one of the two SPCC-SD steel plates was debonded was measured and defined as an adhesive strength at shearing.

$$\text{Adhesive strength at shearing (MPa)} = \text{test force (N)}/250 \text{ mm}^2$$

(Comparative Example 1)

A spacer having a thickness of 50 μm was placed at a distal end of the SPCC-SD steel plate such that an adhesiveness area was 250 mm$^2$, and the pressure-sensitive adhesive in Comparative Example 1 was applied thereto.
Another SPCC-SD steel plate was stacked, and fixed with a clip. The pressure-sensitive adhesive was stored in a heating oven at 130°C for 60 minutes to cure the pressure-sensitive adhesive to obtain a joined body in Comparative Example 1.
The adhesive strength at shearing of the pressure-sensitive adhesive after curing was measured in the same manner as in Example 1.

<Evaluation of Dismantlability>

According to the same method as the evaluation method of the adhesive strength, two SPCC-SD steel plates were bonded to each other by the easily dismantling adhesive sheets and the pressure-sensitive adhesives in Examples and Comparative Examples, and the layer having pressure-sensitive adhesiveness and adhesiveness and the pressure-sensitive adhesive were separately cured to perform adhesion thereby obtaining joined body samples.
Subsequently, each joined body sample was stored and heated in a heating oven at 300°C for 30 minutes. Further, the test sample was cooled by being left at room temperature (25°C).
Subsequently, one SPCC-SD steel plate of each joined body sample was lifted and evaluated.
At this time, a case where the other SPCC-SD steel plate was naturally peeled off from one of the lifted SPCC-SD steel plate was determined to be naturally dismantled.

Examples and Comparative Examples are shown in Table 1 below.

[Table 1]

Table 1

| | | | Examples | | | | | |
|---|---|---|---|---|---|---|---|---|
| | | | 1 | 2 | 3 | 4 | 5 | 6 |
| Acrylic resin | | Parts by mass | 75 | 50 | 25 | 25 | 10 | 100 |
| Liquid epoxy resin | jER828 | Parts by mass | 17.5 | 35 | 52.5 | 52.5 | 63 | |
| Solid epoxy resin | jER1001 | Parts by mass | | | | | | |
| Phenoxy resin | jER1256 | Parts by mass | 7.5 | 15 | 22.5 | 22.5 | 27 | |
| Crosslinking agent | Coronate L | Parts by mass | 5.0 | 3.3 | 1.7 | 1.7 | 0.7 | 6.7 |
| Curing agent | DICY7 | Parts by mass | 5 | 5 | 5 | 5 | 5 | |
| Curing accelerator | DCMU | Parts by mass | 3 | 3 | 3 | 3 | 3 | |
| Inorganic expanding agent | Expandable graphite | [mass%] | 10 | 10 | 10 | 25 | 10 | 10 |
| Shape | | | Sheet | Sheet | Sheet | Sheet | Sheet | Sheet |
| Molding conditions | Stirring (kneading) | | 23°C,15 minutes | 23°C,15 minutes | 23°C,15 minutes | 23°C,15 minutes | 23°C,15 minutes | 23°C, 15 minutes |
| | Sheet molding | | 80°C, 5 minutes | 80°C, 5 minutes | 80°C, 5 minutes | 80°C, 5 minutes | 80°C, 5 minutes | 80°C, 5 minutes |
| Characteristics of layer having pressure-sensitive adhesiveness and adhesiveness | Thickness | [μm] | 50 | 50 | 50 | 50 | 50 | 50 |
| | Pressure-sensitive adhesive strength | [N/20 mm] | 5.4 | 1.7 | 3.9 | 1.2 | 1.6 | 5.3 |
| | Holding force | [mm] | 0 | 0 | 0 | 0 | 0.5 | 0 |

(continued)

| Item | | Unit | Example 7 | Example | Example 8 | Example | Comparative Example 1 | Comparative Example 2 |
|---|---|---|---|---|---|---|---|---|
| | | | **Examples** | | | | **Comparative Examples** | |
| | | | (7) | | (8) | | (1) | (2) |
| Adhesiveness — Adhesive strength at shearing | | [MPa] | 2.1 | 7.5 | 7.7 | 2.9 | 8.9 | 0.9 |
| Dismantlability — Dismantling behavior | | | Natural dismantling | Natural dismantling | Natural dismantling | Natural dismantling | Natural dismantling | Natural dismantling |
| Acrylic resin | | Parts by mass | | | | | | |
| Liquid epoxy resin | jER828 | Parts by mass | 70 | | 70 | | 30 | 10 |
| Solid epoxy resin | jER1001 | Parts by mass | | | | | 70 | 90 |
| Phenoxy resin | jER1256 | Parts by mass | 30 | | 30 | | | |
| Crosslinking agent | Coronate L | Parts by mass | 0.0 | | 8.0 | | | |
| Curing agent | DICY7 | Parts by mass | 5 | | 5 | | 5 | 5 |
| Curing accelerator | DCMU | Parts by mass | 3 | | 3 | | 3 | 3 |
| Inorganic expanding agent | Expandable graphite | [mass%] | 10 | | 10 | | 10 | 10 |
| Shape | | | Sheet | | Sheet | | Liquid | Sheet |
| Molding conditions — Stirring (kneading) | | | 23°C, 15 minutes | | 23°C, 15 minutes | | 80°C, 15 minutes | 80°C, 15 minutes |
| Molding conditions — Sheet molding | | | 80°C, 5 minutes | | 80°C, 5 minutes | | | 80°C: 3 minutes |

(continued)

| Characteristics of layer having pressure-sensitive adhesiveness and adhesiveness | | | Examples | | Comparative Examples | |
|---|---|---|---|---|---|---|
| | | | 7 | 8 | 1 | 2 |
| | Thickness | [μm] | 50 | 50 | 50 | 50 |
| | Pressure-sensitive adhesive strength | [N/20 mm] | 4.1 | 1.2 | ND (For liquids) | Cohesive failure |
| | Holding force | [mm] | 25≤ | 0.5 | ND (For liquids) | 25≤ |
| Adhesiveness | Adhesive strength at shearing | [MPa] | 18 | 23.5 | 16.5 | 2.2 |
| Dismantlability | Dismantling behavior | | Natural dismantling | Natural dismantling | Natural dismantling | Natural dismantling |

The components shown in Table 1 will be described.

Acrylic resin: prepared product

(Preparation of Acrylic Resin)

The acrylic resin was prepared by the following procedure.

Into a four-neck flask equipped with a stirring blade, a thermometer, a nitrogen gas inlet tube, and a condenser, 100 parts by mass of n-butyl acrylate, 5 parts by mass of acrylic acid, and 0.1 parts by mass of 2,2'-azobisisobutyronitrile as a polymerization initiator were added together with 100 parts by mass of ethyl acetate and 100 parts by mass of toluene, nitrogen gas was introduced to perform replacement by nitrogen gas for 1 hour while gently stirring the mixture, followed by performing a polymerization reaction for 15 hours while maintaining the liquid temperature of the flask at around 55°C, and an acrylic resin solution having a weight average molecular weight of 600000 was prepared.

Liquid epoxy resin: jER 828 manufactured by Mitsubishi Chemical Corporation

Solid epoxy resin: jER 1001 manufactured by Mitsubishi Chemical Corporation

Phenoxy resin: jER 1256 manufactured by Mitsubishi Chemical Corporation

Crosslinking agent: Coronate L manufactured by Tosoh Corporation

Curing agent: DICY7 manufactured by Mitsubishi Chemical Corporation

Curing accelerator: DCMU manufactured by Hodogaya Chemical Co., Ltd.

Expandable graphite: GG210-200N manufactured by NeoGraf Corporation

INDUSTRIAL APPLICABILITY

The present invention can provide an easily dismantling adhesive sheet which exhibits an excellent pressure-sensitive adhesive strength by which adherends can be easily bonded to each other and workability for adhesion can be improved, an excellent holding force by which deviation or peeling does not occur until the sheet is cured and adheres (joins) to the adherend even in an environment where heat or stress is applied, and an excellent adhesive strength allowing adherends to firmly adhere to each other. The joined body obtained by joining with the easily dismantling adhesive sheet according to the present invention is excellent in the dismantlability that allows the joined body to be easily dismantled at a desired time.

The present invention can provide a laminated body using the easily dismantling adhesive sheet, a joined body, a method for producing a joined body, and a method for dismantling a joined body.

Although the present invention has been described in detail with reference to specific embodiments, it will be apparent to those skilled in the art that various changes and modifications can be made without departing from the spirit and scope of the present invention.

The present application is based on a Japanese Patent Application (No. 2022-39503) filed on March 14, 2022, the contents of which are incorporated herein by reference.

REFERENCE SIGNS LIST

100 easily dismantling adhesive sheet
11 layer having pressure-sensitive adhesiveness and adhesiveness
12 supporting substrate
200 joined body
14 first member
15 second member

**Claims**

1. An easily dismantling adhesive sheet comprising:

   a layer having pressure-sensitive adhesiveness and adhesiveness containing an inorganic expanding agent and a resin,
   wherein the layer having pressure-sensitive adhesiveness and adhesiveness has a pressure-sensitive adhesive strength of 1.0 N/20 mm or more.

2. The easily dismantling adhesive sheet according to claim 1,
   wherein the resin comprises a first resin having a crosslinked structure.

3. The easily dismantling adhesive sheet according to claim 1,
   wherein the resin comprises a second resin having a reactive functional group.

4. The easily dismantling adhesive sheet according to claim 1,
   wherein the layer having pressure-sensitive adhesiveness and adhesiveness contains the inorganic expanding agent in an amount of 1 mass% to 40 mass%.

5. The easily dismantling adhesive sheet according to claim 1, further comprising a supporting substrate,
   wherein the layer having pressure-sensitive adhesiveness and adhesiveness is provided on at least one surface of the supporting substrate.

6. The easily dismantling adhesive sheet according to claim 5,
   wherein the supporting substrate is a film-shaped substrate.

7. A laminated body obtained by bonding two or more adherends using the easily dismantling adhesive sheet according to any one of claims 1 to 6.

8. A joined body obtained by joining two or more adherends using the easily dismantling adhesive sheet according to any one of claims 1 to 6.

9. The joined body according to claim 8,
   wherein the easily dismantling adhesive sheet has a space in which the inorganic expanding agent expands.

10. A method for producing a joined body, the method comprising a joining step of joining the two or more adherends by curing the layer having pressure-sensitive adhesiveness and adhesiveness in the laminated body according to claim 7.

11. A method for dismantling the joined body according to claim 8, the method comprising a dismantling step of dismantling the joined body by applying a stimulus to the layer having pressure-sensitive adhesiveness and adhesiveness in the joined body.

*FIG. 1*

100

11

*FIG. 2*

100

12

11

*FIG. 3*

15

11

14

200

<table>
<tr><td colspan="2" align="center">**INTERNATIONAL SEARCH REPORT**</td><td>International application No.<br><br>**PCT/JP2023/009716**</td></tr>
</table>

**A. CLASSIFICATION OF SUBJECT MATTER**

*C09J 7/30*(2018.01)i; *C09J 5/00*(2006.01)i; *C09J 7/20*(2018.01)i
FI:   C09J7/30; C09J7/20; C09J5/00

According to International Patent Classification (IPC) or to both national classification and IPC

**B. FIELDS SEARCHED**

Minimum documentation searched (classification system followed by classification symbols)

C09J1/00-201/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-204332 A (MINNESOTA MINING AND MANUFACTURING COMPANY) 25 July 2000 (2000-07-25)<br>claims 3,4, paragraphs [0015], [0023], [0028] | 1-11 |
| Y | 有満幸生、ほか3名, 熱剥離シート「リバアルファ」の開発, 日本接着学会年次大会講演要旨集, 15 June 2007, vol. 45th, pp. 113-117, in particular, 4.3. Adhesion at exfoliation temperature, fig. 4<br>4.3. Adhesion at exfoliation temperature, fig. 4, (ARIMITSU, Yukio et al. Development of Thermal Release Sheet "REVALPHA".), non-official translation (Lecture Abstracts of Annual Meeting of the Adhesion Society of Japan) | 1-11 |
| A | JP 2006-225544 A (NAGASE CHEMTEX CORP) 31 August 2006 (2006-08-31)<br>claim 4 | 1-11 |
| A | JP 2004-189856 A (TOKAI RUBBER IND LTD) 08 July 2004 (2004-07-08)<br>claim 1 | 1-11 |

☐ Further documents are listed in the continuation of Box C.   ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **11 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="2">**INTERNATIONAL SEARCH REPORT**<br>Information on patent family members</td><td>International application No.<br><br>**PCT/JP2023/009716**</td></tr>
</table>

| Patent document cited in search report | | | Publication date (day/month/year) | Patent family member(s) | | | Publication date (day/month/year) |
|---|---|---|---|---|---|---|---|
| JP | 2000-204332 | A | 25 July 2000 | WO | 2000/40648 | A1 | |
| | | | | claims 10, 11 | | | |
| | | | | EP | 1141104 | A1 | |
| JP | 2006-225544 | A | 31 August 2006 | (Family: none) | | | |
| JP | 2004-189856 | A | 08 July 2004 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004189856 A
- JP 2010106193 A

- JP 2022039503 A